# EUROPEAN PATENT APPLICATION

(11) **EP 4 752 431 A1**
(43) Date of publication of application: **03.06.2026**
(21) Application number: 25216550.1
(22) Date of filing: 18.11.2025
(51) Int. Cl.: F21S 43/14, B62J 6/05, F21S 43/241, F21S 43/243, F21S 43/247, F21S 43/20, F21S 43/40

(54) **VEHICLE LIGHTING FIXTURE**

(30) Priority: 27.11.2024 JP 2024206740
(71) Applicant: Mitsuba Corporation, Kiryu-shi, Gunma 376-8555 (JP)
(72) Inventor: UCHIDA, Jun, Kiryu-shi, Gunma,, 376-8555 (JP)
(74) Representative: Winter, Brandl - Partnerschaft mbB

(57) **Abstract**

The disclosure improves the light emission state while refining the design appeal of the housing. The first emitting surface (71a) comprises a first spherical surface (71b) protruding in a direction of light emission, and second spherical surfaces (71c, 71d) disposed radially outward of the first spherical surface (71b) and configured to emit light to an exterior so as to approach a direction of the light emitted from a center of the first spherical surface (71b) to an exterior. The light emitted to an exterior from the second spherical surfaces (71c, 71d) is brought closer to a direction of the light emitted from the first spherical surface (71b), so that even in the winker lamp (10) designed in an elongated rod shape, interference between light emitted from the first emitting surface (71a) and light emitted from the second emitting surface (62d) is suppressed.

## Description

### BACKGROUND

### Technical Field

The disclosure relates to a vehicle lighting fixture.

### Description of Related Art

Patent Document 1 describes a vehicle lighting fixture such as a rear combination lamp, etc. mounted on a vehicle such as an automobile. The vehicle lighting fixture described in Patent Document 1 includes a lamp housing, a lamp lens, a light source, a vehicle light guide member, and an inner lens. In addition, when viewing the lamp lens from the front, the vehicle light guide member emits light in a u-shaped configuration, and the inner lens surrounded by the vehicle light guide member emits light in a circular configuration.

### Patent Documents

[Patent Document 1]Japanese Patent Laid-Open No. 2020-107407

### SUMMARY

In the technique described in Patent Document 1, for example, in a case of making the lamp housing and lamp lens have an elongated rod-shaped design, a part of the vehicle light guide member would be disposed in the vicinity of the inner lens. As a result, there was a problem that the light emitted from the inner lens and the light emitted from the vehicle light guide member interfere with each other, causing the vehicle lighting fixture unable to emit light as stipulated.

An object of the disclosure is to provide a vehicle lighting fixture that can improve the light emission state while refining the design appeal of the housing.

In one aspect of the disclosure, the vehicle lighting fixture includes a substrate on which a light source is mounted; a housing for accommodating the substrate; and a light guide member accommodated in the housing; wherein the light guide member includes an incident part having an incident surface for allowing light from the light source to be incident into an interior of the incident part; a first emitting part connected to the incident part, the first emitting part having a first emitting surface for allowing light incident from the incident part to be emitted to an exterior; a light guide part connected to the incident part, into which light different from light incident on the first emitting part is incident; and a second emitting part connected to the light guide part and having a second emitting surface for allowing light incident from the light guide part to be emitted to an exterior; wherein the first emitting surface includes a first spherical surface protruding in a direction of light emission; a second spherical surface disposed radially outward of the first spherical surface and configured to emit light to an exterior so as to approach a direction of the light emitted from a center of the first spherical surface to an exterior.

According to the disclosure, a vehicle lighting fixture can be realized that can improve the light emission state while refining the design appeal of the housing.

### BRIEF DESCRIPTION OF THE DRAWINGS

FIG. 1 is a view of the winker lamp as seen from the front of the lens.
FIG. 2 is a view taken in the direction of arrow A in FIG. 1.
FIG. 3 is a cross-sectional view taken along line B-B in FIG. 1.
FIG. 4 is a perspective view of the light guide member as seen from the lens side.
FIG. 5 is a perspective view of the light guide member as seen from the substrate side.
FIG. 6 shows the light guide member of FIG. 3 as a single unit.
FIG. 7 is a cross-sectional view taken along line C-C in FIG. 6.
FIG. 8 describes the relationship between the first light and the first normal line.
FIG. 9 describes the relationship between the second light and the second normal line.
FIG. 10 shows a comparative example with respect to FIG. 7.
FIG. 11 is image data comparing the light emission state of the light guide member (embodiment and comparative example).
FIG. 12 shows a modification example with respect to FIG. 3 with a cross-sectional view.

### DESCRIPTION OF THE EMBODIMENTS

Hereinafter, one embodiment of the disclosure will be described in detail using the drawings.

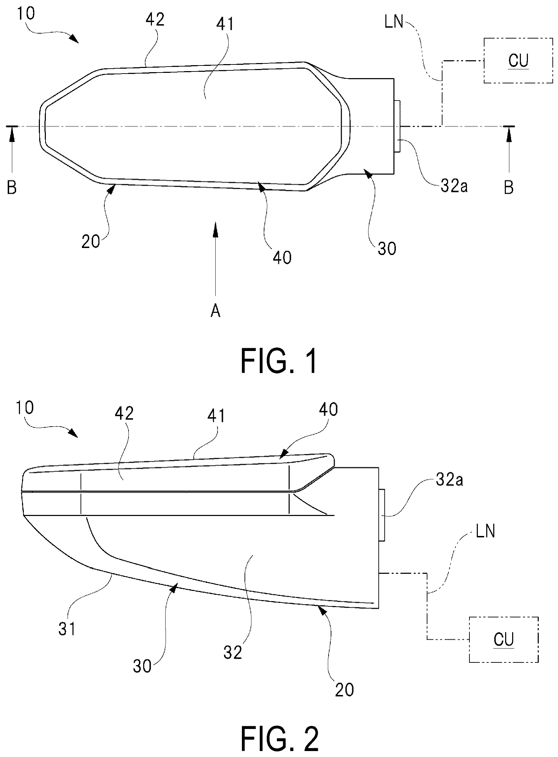

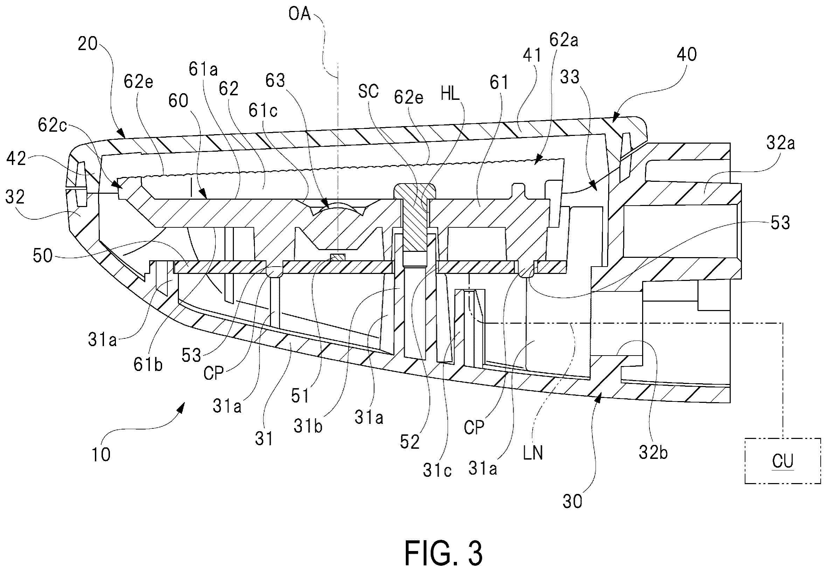

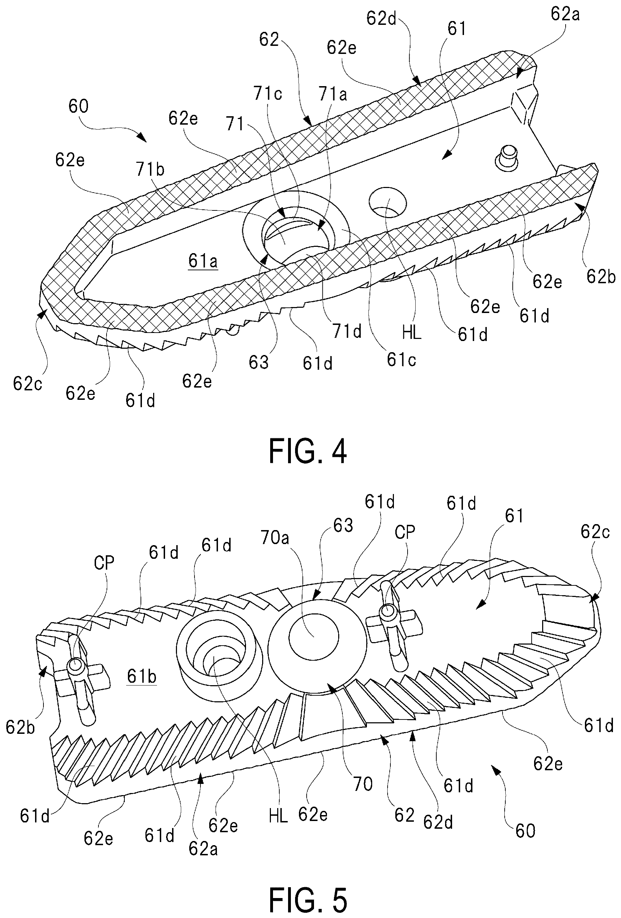

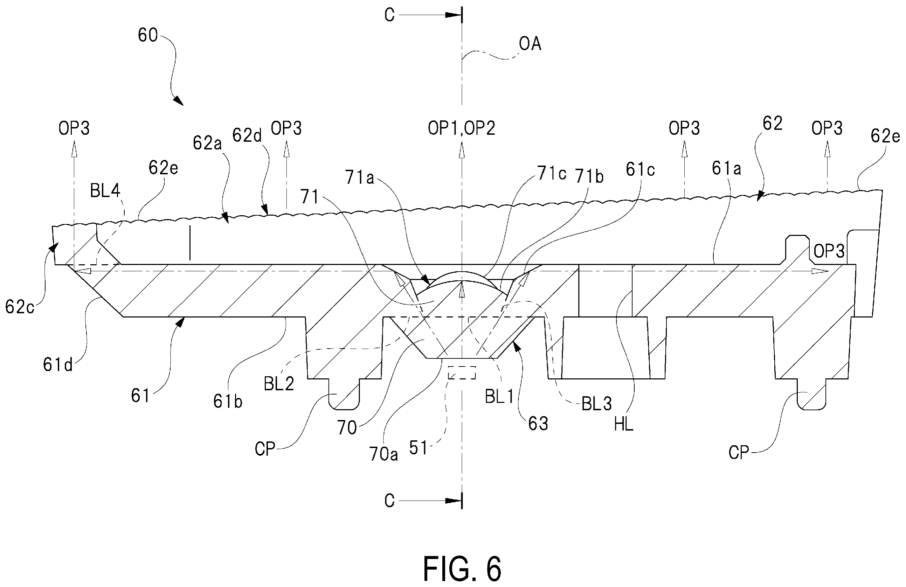

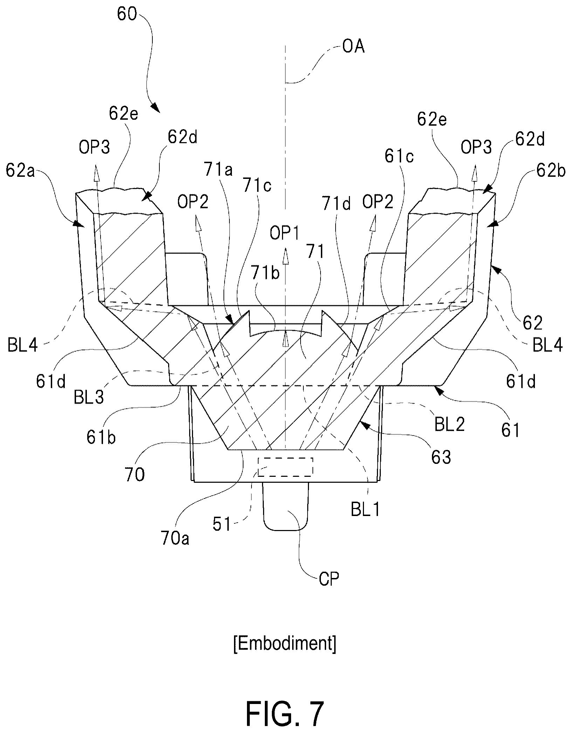

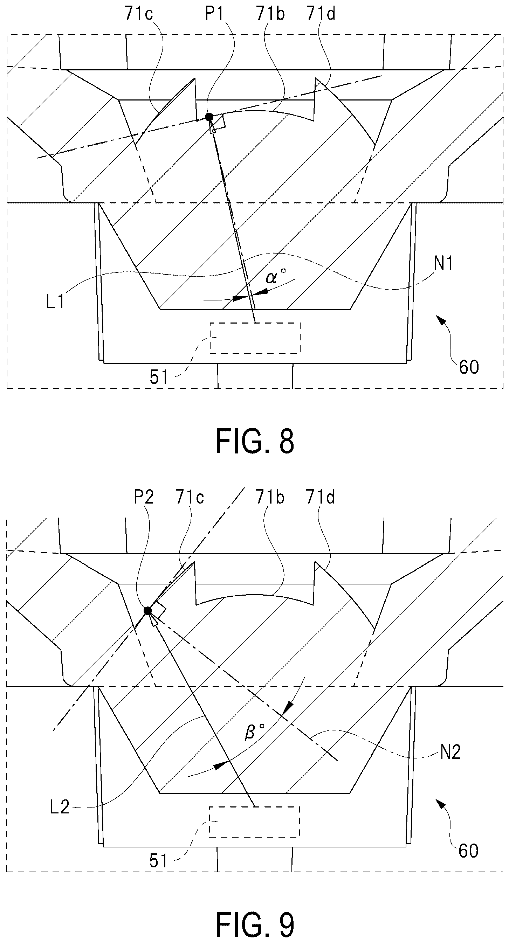

FIG. 1 is a view of the winker lamp as seen from the front of the lens, FIG. 2 is a view taken along arrow A in FIG. 1, FIG. 3 is a cross-sectional view taken along line B-B in FIG. 1, FIG. 4 is a perspective view of the light guide member as seen from the lens side, FIG. 5 is a perspective view of the light guide member as seen from the substrate side, FIG. 6 is a view showing the light guide member of FIG. 3 alone, FIG. 7 is a cross-sectional view taken along line C-C in FIG. 6, FIG. 8 is a view for explaining the relationship between the first light and the first normal line, and FIG. 9 is a view for explaining the relationship between the second light and the second normal line.

### <Overview of Winker Lamp>

The winker lamp 10 shown in FIG. 1 to FIG. 3 is respectively mounted on the left and right sides at the front and rear of a motorcycle. Specifically, the winker lamp 10 is fixed to cowl stays provided at the front and back, left and right of the motorcycle via supporting members (not shown). The winker lamp 10 corresponds to the vehicle lighting fixture in the disclosure.

### <Housing>

As shown in FIG. 1 to FIG. 3, the winker lamp 10 includes a hollow housing 20 that forms its outer shell. The housing 20 is formed elongated in the vehicle width direction of the motorcycle (left-right direction in the figure) and extends in a substantially rod-shaped configuration. The housing 20 includes a housing body 30 made of an opaque black (or similar) plastic material, and a lens 40 made of a transparent and hard plastic material.

### <Housing Body>

The housing body 30 has an opening on the side where the lens 40 is disposed (upper side in FIG. 2 and FIG. 3) and is formed in a substantially box-shaped. The housing body 30 includes a housing bottom wall 31 that faces the lens 40, and a housing side wall 32 that protrudes from the housing bottom wall 31 toward the lens 40 is integrally provided at the periphery of the housing bottom wall 31. An opening part 33 is provided on the side of the housing side wall 32 where the lens 40 is disposed, and the opening part 33 is sealed by the lens 40.

As shown in FIG. 3, a plurality of substrate support columns 31a, a single screw fixing column 31b, and a single wiring holding post 31c are integrally provided on the housing bottom wall 31. The plurality of substrate support columns 31a support the substrate 50 without rattling. A fixing screw SC for fixing the substrate 50 and the light guide member 60 to the housing body 30 is screwed to the single screw fixing column 31b. The single wiring holding post 31c holds wiring LN that supplies drive current to the substrate 50.

Additionally, the housing side wall 32 is provided with a fixed cylinder part 32a to which a supporting member fixed to a cowl stay is fixed, and a wiring insertion hole 32b that is disposed in the vicinity of the fixed cylinder part 32a and through which the wiring LN is inserted via a grommet (not shown). The fixed cylinder part 32a and the wiring insertion hole 32b are respectively disposed on the vehicle width direction inward side (right side in FIG. 3) of the housing body 30.

### <Lens>

As shown in FIG. 1 to FIG. 3, the lens 40 is formed in a substantially rectangular flat plate shape and is disposed facing the light guide member 60 through which light from the light source 51 mounted on the substrate 50 passes. That is, the lens 40 is disposed on the light projection side (upper side in FIG. 3) of the light source 51. Accordingly, light from the light source 51 passes through the interior of the light guide member 60 and is emitted toward the lens 40. Therefore, the light emission state of the light guide member 60 can be recognized from the exterior of the lens 40.

The lens 40 includes a flat plate-shaped lens body 41. Additionally, a lens sidewall 42 that protrudes from the lens body 41 toward the housing body 30 is integrally provided at the periphery of the lens body 41. Here, the tip side (lower side in FIG. 3) of the lens sidewall 42 is welded to the tip side (upper side in FIG. 3) of the housing side wall 32 by an infrared welding machine or the like. Accordingly, the opening part 33 is sealed by the lens 40, and entry of rainwater, dust, and the like into the interior of the housing 20 is prevented.

Notably, the fixing of the lens 40 and the housing body 30 is not limited to welding by an infrared welding machine, and other fixing methods such as fixing with adhesive or ultrasonic welding may be adopted. That is, as long as the opening part 33 can be sealed with the lens 40, these fixing methods are not limited.

### <Substrate>

As shown in FIG. 3, a substrate 50 made of a substantially rectangular flat plate is accommodated inside the housing 20. Here, a PCB (Printed Circuit Board) having conductor wiring printed on the surface is adopted for the substrate 50. The substrate 50 is supported by a plurality of substrate support columns 31a provided on the housing body 30, so as not to rattle inside the housing 20.

A single light source 51 is mounted at the longitudinal direction central part of the substrate 50 and on the side where the light guide member 60 is disposed (upper side in FIG. 3). Here, an LED (Light Emitting Diode) is adopted for the light source 51. Specifically, the light source 51 is electrically connected to printed wiring (not shown) of the substrate 50.

Also, one end of the wiring LN is electrically connected to the printed wiring of the substrate 50, and the other end of the wiring LN is electrically connected to the vehicle controller CU. Thereby, the light source 51 emits light by supply of drive current from the vehicle controller CU.

Furthermore, a single large diameter hole 52 is provided in the vicinity of the light source 51 on the substrate 50. The tip side (upper side in FIG. 3) of the screw fixing column 31b is inserted through the large diameter hole 52. Further, the substrate 50 is provided with a pair of small diameter holes 53 having smaller diameters than the large diameter hole 52. A pair of positioning protrusion parts CP provided on the light guide member 60 are respectively inserted into the pair of small diameter holes 53. Thereby, the light guide member 60 is fixed to the substrate 50 without rattling.

### <Light Guide Member>

As shown in FIG. 3 to FIG. 7, a light guide member 60 is accommodated inside the housing 20. The light guide member 60 is formed of a transparent and hard plastic material, similar to the lens 40. Light from the light source 51 is incident on and passes through the interior of the light guide member 60.

The light guide member 60 is formed in a substantially rectangular flat plate shape and is formed thicker than the lens 40. Specifically, the light guide member 60 is formed in a tapered shape toward the vehicle width direction outward (left side in FIG. 4) in a state where the winker lamp 10 is attached to the cowl stay. The light guide member 60 includes a bottom wall part 61 and a side wall part 62 that protrudes from the periphery of the bottom wall part 61 toward the side where the lens 40 is provided at a predetermined height and is formed in a substantially U-shaped configuration.

The bottom wall part 61 is formed in a flat plate shape and has a surface part 61a on the side where the lens 40 is provided and a back surface part 61b on the side where the substrate 50 is provided. Here, the bottom wall part 61 is provided with a screw insertion hole HL. A fixing screw SC for fixing the substrate 50 and the light guide member 60 to the housing body 30 is inserted through the screw insertion hole HL. Additionally, a pair of positioning protrusion parts CP are provided on the back surface part 61b of the bottom wall part 61. These positioning protrusion parts CP are inserted into the small diameter holes 53 of the substrate 50, whereby the light guide member 60 is positioned relative to the substrate 50.

Furthermore, an inner lens part 63 that faces the light source 51 in a direction orthogonal to the longitudinal direction of the substrate 50 is provided at the longitudinal direction central part of the bottom wall part 61. That is, the light guide member 60 is disposed on the light projection side (lens 40 side) of the light source 51, and light from the light source 51 is incident on the interior of the light guide member 60 from the inner lens part 63. The inner lens part 63 is disposed so as to span between the surface part 61a and the back surface part 61b of the bottom wall part 61.

The inner lens part 63 includes an incident part 70 and a first emitting part 71. Specifically, the incident part 70 and the first emitting part 71 are connected to each other via a first boundary line BL1 (broken line in FIG. 6 and FIG. 7), and in the axial direction of the optical axis OA passing through the center of the first emitting part 71, the incident part 70 is disposed on the side where the light source 51 is provided (incident side), and the first emitting part 71 is disposed on the side where the lens 40 is provided (emitting side). The first boundary line BL1 is disposed at the same position as the position where the back surface part 61b of the bottom wall part 61 is disposed in the axial direction of the optical axis OA.

The incident part 70 has a function of causing light from the light source 51 to be incident on the interior of the inner lens part 63, that is, the interior of the light guide member 60. The incident part 70 includes an incident surface 70a that faces the light source 51 in the axial direction of the optical axis OA. Here, the incident part 70 protrudes from the back surface part 61b of the bottom wall part 61 at a predetermined height and is formed in a truncated cone shape. Thereby, the incident surface 70a is disposed in the vicinity of the light source 51, and light from the light source 51 is efficiently incident on the interior of the inner lens part 63 via the incident surface 70a.

Also, the incident part 70 is integrated with the bottom wall part 61 via an annular second boundary line BL2 (broken line in FIG. 6 and FIG. 7) disposed at the outer peripheral part of the first boundary line BL1. That is, the central portion of the incident part 70 is connected to the first emitting part 71 via the first boundary line BL1, and the outer peripheral portion of the incident part 70 is connected to the bottom wall part 61 via the second boundary line BL2. Thereby, part of the light from the light source 51 that is incident on the incident part 70 from the incident surface 70a is incident on the first emitting part 71 from the first boundary line BL1. Also, light different from the light incident on the first emitting part 71 is incident on the bottom wall part 61 from the second boundary line BL2.

Furthermore, the outer peripheral part of the first emitting part 71 and the bottom wall part 61 are integrated with each other via an annular third boundary line BL3 (broken line in FIG. 6 and FIG. 7). That is, the outer peripheral portion of the first emitting part 71 is connected to the bottom wall part 61 via the third boundary line BL3. In this way, annular second and third boundary lines BL2 and BL3 are respectively disposed at the boundary portion between the inner lens part 63 and the bottom wall part 61.

Here, the first emitting part 71 has a function of directly emitting light from the light source 51 that is incident on the incident part 70 to the exterior without passing through the bottom wall part 61. Specifically, in the axial direction of the optical axis OA, on the side of the first emitting part 71 opposite to the incident part 70 side, a first emitting surface 71a is provided that emits light incident on the first emitting part 71 to the exterior.

As shown in FIG. 7, the first emitting surface 71a includes a single first spherical surface 71b and a pair of second spherical surfaces 71c and 71d. The first spherical surface 71b is disposed at the center of the first emitting surface 71a and protrudes in the light emission direction (upward in the figure). The optical axis OA extending in the light projection direction of the light source 51 is disposed at the center of the first spherical surface 71b. On the other hand, the pair of second spherical surfaces 71c and 71d are disposed radially outward of the first spherical surface 71b. Specifically, the pair of second spherical surfaces 71c and 71d are disposed facing each other so as to sandwich the single first spherical surface 71b.

The first spherical surface 71b and the second spherical surfaces 71c and 71d forming the first emitting surface 71a are each composed of free-form surfaces having partially different curvatures. In a cross-section along the short direction of the light guide member 60, as shown in FIG. 8 and FIG. 9, a first angle α° is defined as the angle between a first normal line N1 at an arbitrary first arbitrary point P1 forming the first spherical surface 71b and a first light L1 guided toward the first arbitrary point P1, and a second angle β° is defined as the angle between a second normal line N2 at an arbitrary second arbitrary point P2 forming the second spherical surface 71c and a second light L2 guided toward the second arbitrary point P2. The second angle β° is set to be larger than the first angle α° (β°>α°).

Also, as shown in FIG. 6 and FIG. 7, the portion of the bottom wall part 61 excluding the inner lens part 63 is a portion through which light from the incident part 70 can pass inside, and corresponds to the light guide part in the disclosure. An annular reflective surface 61c is provided on the surface part 61a of the bottom wall part 61 so as to surround the periphery of the inner lens part 63. As shown by the dashed-dotted arrow OP3, the annular reflective surface 61c has a function of totally reflecting light from the light source 51 that is incident from the incident part 70 into the interior of the bottom wall part 61, and causing the light to travel radially within the interior of the bottom wall part 61.

Furthermore, a plurality of reflective surfaces 61d are provided on the back surface part 61b of the bottom wall part 61. Specifically, the plurality of reflective surfaces 61d are arranged in a substantially U-shaped configuration following the shape of the periphery of the bottom wall part 61. That is, the plurality of reflective surfaces 61d face the side wall part 62 formed in a substantially U-shaped configuration in the axial direction of the optical axis OA. The plurality of reflective surfaces 61d have a function of totally reflecting light from the light source 51 passing through the interior of the bottom wall part 61 within the bottom wall part 61 and causing the light to travel into the interior of the side wall part 62, as shown by the dashed-dotted arrow OP3. In this manner, the bottom wall part 61 (the portion excluding the inner lens part 63) serving as the light guide part is provided with the annular reflective surface 61c and the plurality of reflective surfaces 61d.

Also, the side wall part 62 is connected integrally to the periphery on the surface part 61a side of the bottom wall part 61 via a fourth boundary line BL4 (broken line in FIG. 6 and FIG. 7). The side wall part 62 is formed in a substantially U-shaped configuration following the shape of the periphery of the bottom wall part 61, and includes a first stand wall 62a and a second stand wall 62b extending in the longitudinal direction of the light guide member 60. The first and second stand walls 62a and 62b are disposed facing each other so as to be mirror images of each other with the inner lens part 63 (first emitting surface 71a) provided on the bottom wall part 61 as the center. Also, both the first and second stand walls 62a and 62b are disposed in the vicinity of the inner lens part 63.

The first and second stand walls 62a and 62b stand upright in the light emission direction (axial direction of the optical axis OA), and the vehicle width direction outward sides (left side in FIG. 3 and FIG. 4) of the first and second stand walls 62a and 62b are connected to each other by a connecting wall 62c formed in a substantially U-shaped configuration. The vehicle width direction inward side (right side in FIG. 3 and FIG. 4) of the side wall part 62 is open, whereby the side wall part 62 is formed in a substantially U-shaped configuration.

Also, the side wall part 62 consisting of the first and second stand walls 62a and 62b and the connecting wall 62c is provided with a second emitting surface 62d. The second emitting surface 62d is disposed at the tip end in the protruding direction of the side wall part 62, that is, on the side where the lens 40 is provided (upper side in FIG. 6 and FIG. 7). The second emitting surface 62d has a function of emitting light from the light source 51 incident from the bottom wall part 61 to the exterior.

The second emitting surface 62d formed in a substantially U-shaped configuration is provided with a plurality of protrusion parts 62e over its entire area. The plurality of protrusion parts 62e have a function of diffusing and emitting light from the light source 51 passing through the interior of the side wall part 62 toward the lens 40. Here, the side wall part 62 provided with the second emitting surface 62d corresponds to the second emitting part in the disclosure.

Furthermore, as shown in FIG. 7, in the light emission direction (axial direction of the optical axis OA), the first emitting surface 71a (first spherical surface 71b and second spherical surfaces 71c and 71d) provided on the inner lens part 63 is disposed closer to the light source 51 (lower side in the figure) than the second emitting surface 62d provided on the side wall part 62. Accordingly, when viewing the winker lamp 10 from the exterior, the first emitting surface 71a closer to the light source 51 has higher luminance than the second emitting surface 62d farther from the light source 51.

Here, as shown in FIG. 7, in the short direction of the light guide member 60 and on the surface part 61a side of the bottom wall part 61, one second spherical surface 71c is disposed between the first spherical surface 71b and the first stand wall 62a, and the other second spherical surface 71d is disposed between the first spherical surface 71b and the second stand wall 62b.

The first spherical surface 71b has a function of emitting light from the light source 51 incident on the inner lens part 63 to the exterior along the optical axis OA, as shown by the dashed-dotted arrow OP1. In contrast, the pair of second spherical surfaces 71c and 71d have a function of refracting light from the light source 51 incident on the inner lens part 63 so as to approach the direction of the light emitted from a center of the first spherical surface 71b (so as to approach the optical axis OA) and emitting the light to the exterior, as shown by the dashed-dotted arrow OP2.

### <Light Path Passing Through Interior of Light Guide Member>

Next, the path of light from the light source 51 passing through the interior of the light guide member 60 will be described in detail using drawings while referring to the light guide member 100 of the comparative example.

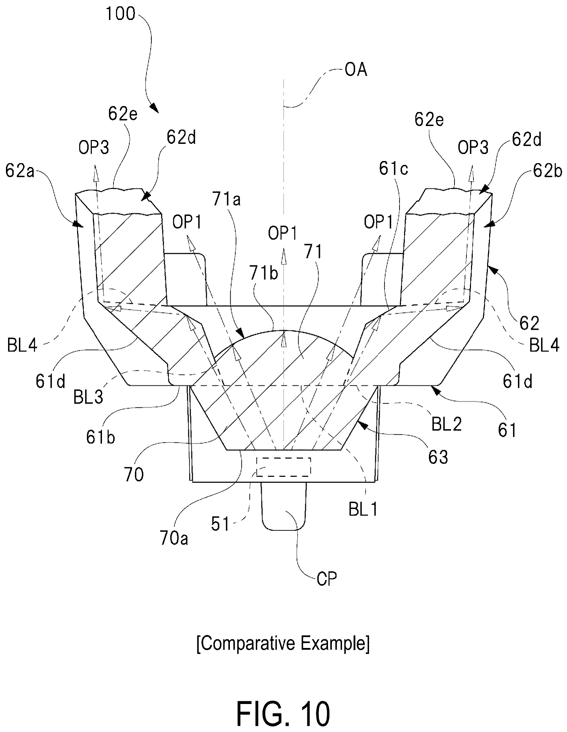

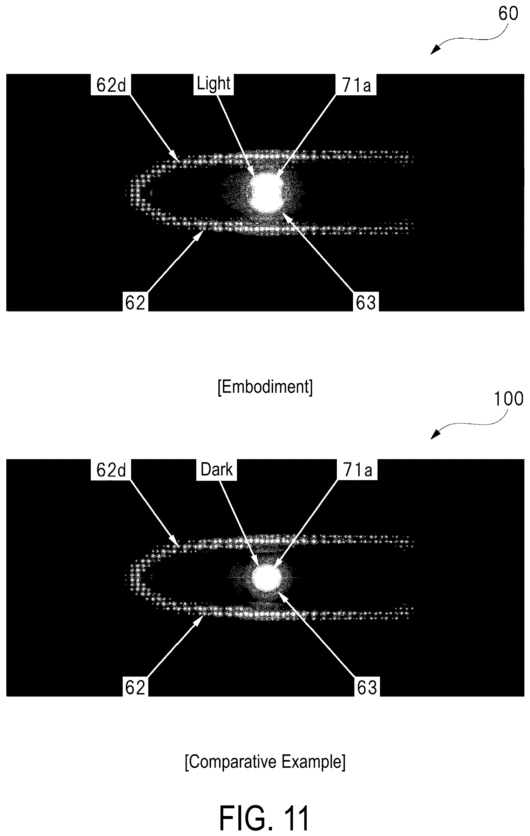

FIG. 10 shows a diagram corresponding to FIG. 7 showing the comparative example, and FIG. 11 shows image data comparing the light emission state of the light guide member (embodiment and comparative example), respectively.

As shown in FIG. 10, the light guide member 100 of the comparative example differs from the above-described light guide member 60 (see FIG. 7) in that the light guide member 100 of the comparative example does not include the pair of second spherical surfaces 71c, 71d, but includes only a single first spherical surface 71b.

As shown in FIG. 6 and FIG. 7, in the light guide member 60 (embodiment), in response to the light source 51 emitting light, light is incident into the interior of the inner lens part 63 from the incident surface 70a of the incident part 70. Then, the light incident into the interior of the incident part 70 is incident into the interior of the first emitting part 71 via the first boundary line BL1, and is also incident into the interior of the bottom wall part 61 via the second boundary line BL2.

The light incident into the interior of the first emitting part 71 is first emitted to the exterior from the first spherical surface 71b forming the first emitting surface 71a. Specifically, as shown by the dashed-dotted arrow OP1 in FIG. 6 and FIG. 7, the light is emitted to the exterior along the optical axis OA.

Also, the light incident into the interior of the first emitting part 71 is secondly emitted to the exterior from the pair of second spherical surfaces 71c, 71d forming the first emitting surface 71a. Specifically, as shown by the dashed-dotted arrow OP2 in FIG. 6 and FIG. 7, the light emitted to the exterior from the second spherical surfaces 71c, 71d is refracted so as to approach the direction of the optical axis OA.

In this way, the light emitted from the first emitting surface 71a is condensed along the optical axis OA, as shown by the dashed-dotted arrows OP1, OP2 in FIG. 6 and FIG. 7. Thereby, as shown in the upper part of FIG. 11 (embodiment), the luminance of the inner lens part 63 (first emitting surface 71a) can be enhanced (brightened) without increasing the diameter of the first emitting surface 71a. In the image data of FIG. 11, the white portions indicate high luminance portions (bright portions).

Also, as shown in FIG. 6 and FIG. 7, the light incident into the interior of the back surface part 61 is totally reflected by the annular reflective surface 61c and directed toward the plurality of reflective surfaces 61d disposed radially outward of the annular reflective surface 61c. Then, the light passing through the interior of the back surface part 61 is totally reflected by the plurality of reflective surfaces 61d and incident into the interior of the side wall part 62 via the fourth boundary line BL4. That is, within the interior of the back surface part 61, total reflection occurs at a total of two locations: the annular reflective surface 61c and the plurality of reflective surfaces 61d.

Thereafter, the light incident into the interior of the side wall part 62 is emitted toward the lens 40 via the plurality of protrusion parts 62e provided on the second emitting surface 62d of the side wall part 62, as shown by the dashed-dotted arrow OP3.

Here, as shown in the upper part of FIG. 11 (embodiment), the second emitting surface 62d of the side wall part 62 emits light in a dot-like pattern by the plurality of protrusion parts 62e each emitting light.

Also, the luminance of the first emitting surface 71a is higher (brighter) than the luminance of the second emitting surface 62d. This is because, in addition to the inner lens part 63 being disposed closer to the light source 51 than the side wall part 62, the light directed toward the pair of second spherical surfaces 71c and 71d is refracted to approach the direction of the optical axis OA and emitted to the exterior.

In contrast, the light guide member 100 of the comparative example (see FIG. 10) does not include the pair of second spherical surfaces 71c and 71d, so the light emitted to the exterior from the first emitting surface 71a is emitted radially at a wide angle from the first spherical surface 71b, as shown by the dashed-dotted arrow OP1 in FIG. 10. That is, the light guide member 100 cannot condense the light emitted to the exterior from the first emitting surface 71a along the optical axis OA, unlike the light guide member 60. Therefore, as shown in the lower part of FIG. 11 (comparative example), the luminance of the first emitting surface 71a forming the inner lens part 63 is lower (darker) compared to the upper part of FIG. 11 (embodiment). In other words, the area of the white portion is smaller in the lower part than in the upper part of FIG. 11.

In this way, in the light guide member 60 (embodiment), a part of the light that would be emitted toward the first and second stand walls 62a and 62b as shown by the dashed-dotted arrow OP1 in the light guide member 100 (comparative example) (see FIG. 10), can be emitted as light refracted to approach the direction of the optical axis OA, as shown by the dashed-dotted arrow OP2 in FIG. 7. Therefore, as shown in FIG. 11, the area of the white portion is larger in the upper [embodiment] than in the lower [comparative example].

In the image data of [embodiment] and [comparative example] shown in FIG. 11, the light source 51 is made to emit light with the same power consumption in both cases. Therefore, in the image data of both [embodiment] and [comparative example], the light emission state of the second emitting surface 62d is substantially the same light emission state in both cases. On the other hand, despite the same power consumption, the luminance of the inner lens part 63 of the light guide member 60 (embodiment) is higher (brighter) than the luminance of the inner lens part 63 of the light guide member 100 (comparative example). In this way, it can be understood that the light guide member 60 of [embodiment] has better visibility than the light guide member 100 of [comparative example].

### <Modification Example>

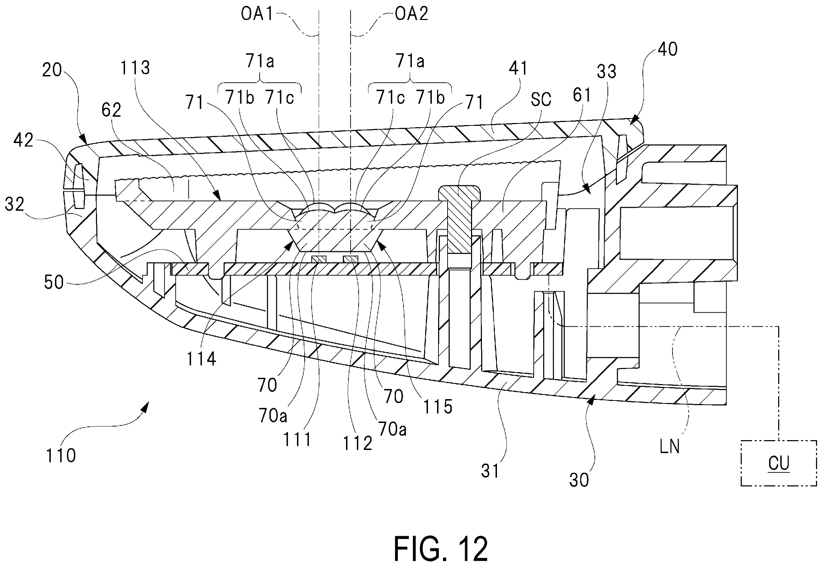

The above-described winker lamp 10 can also adopt a structure as shown in FIG. 12. Hereinafter, the winker lamp 110 of the modification example will be described in detail using the drawings.

FIG. 12 is a cross-sectional view corresponding to FIG. 3 showing the modification example. The same reference numerals are assigned to the same parts as the above-described winker lamp 10, and detailed description thereof is omitted.

As shown in FIG. 12, in the winker lamp 110 of the modification example, a pair of light sources 111, 112 (both LEDs) are mounted on the substrate 50, and a pair of inner lens parts 114, 115 are provided in the light guide member 113 corresponding to the pair of light sources 111, 112. This achieves higher luminance than the above-described winker lamp 10 (see FIG. 3) and further improves visibility.

Specifically, the pair of inner lens parts 114, 115 are arranged side by side in the longitudinal direction of the light guide member 113 in accordance with the spacing of the pair of light sources 111, 112 in the longitudinal direction of the substrate 50 (left-right direction in the figure). The pair of inner lens parts 114, 115 are disposed adjacent to each other and are integrated so as to partially bite into each other as shown in FIG. 12. Thereby, the optical axis OA1 passing through the center of one inner lens part 114 and the optical axis OA2 passing through the center of the other inner lens part 115 are also disposed adjacent to each other.

And the winker lamp 110 of the modification example is also capable of emitting light in the same manner as the light emission state of the above-described winker lamp 10 (see upper part of FIG. 11).

As described in detail above, according to the present embodiment, the first emitting surface 71a includes a first spherical surface 71b protruding in a direction of light emission, and second spherical surfaces 71c, 71d disposed radially outward of the first spherical surface 71b and configured to emit light to an exterior so as to approach a direction of the light emitted from a center of the first spherical surface 71b to the exterior.

Thereby, the light emitted to the exterior from the second spherical surfaces 71c, 71d is brought closer to a direction of the light emitted from the first spherical surface 71b, and even in the winker lamp 10 designed in an elongated rod shape, interference between the light emitted from the first emitting surface 71a and the light emitted from the second emitting surface 62d is suppressed. Therefore, it is possible to refine the design appeal of the winker lamp 10 while making its light emission state favorable.

Also, according to the present embodiment, an angle formed between a first normal line N1 at an arbitrary first arbitrary point P1 forming the first spherical surface 71b and a first light L1 guided toward the first arbitrary point P1 is defined as a first angle α°, and an angle formed between a second normal line N2 at an arbitrary second arbitrary point P2 forming the second spherical surfaces 71c, 71d and a second light L2 guided toward the second arbitrary point P2 is defined as a second angle β°, the second angle β° is larger than the first angle α° (β°>α°).

Thereby, the light from the light source 51 emitted to the exterior from the pair of second spherical surfaces 71c, 71d can be refracted (condensed) so as to approach a direction of the optical axis OA without increasing the diameter of the first emitting surface 71a.

Furthermore, according to the present embodiment, the first emitting surface 71a is disposed closer to the light source 51 than the second emitting surface 62d in the light emission direction.

Thereby, when the winker lamp 10 is viewed from the exterior, the luminance of the first emitting surface 71a close to the light source 51 can be made higher (brighter) than the luminance of the second emitting surface 62d far from the light source 51.

Also, according to the present embodiment, the side wall part 62 has a first stand wall 62a and a second stand wall 62b that are disposed facing each other with the first emitting surface 71a as a center and stand upright in the light emission direction, and the second spherical surfaces 71c, 71d are respectively disposed between the first spherical surface 71b and the first stand wall 62a and between the first spherical surface 71b and the second stand wall 62b.

Thereby, even when the housing 20 has an elongated rod-shaped design, the first emitting part 71 (first emitting surface 71a) and the side wall part 62 (second emitting surface 62d) can emit light as stipulated, and the luminance of the first emitting surface 71a can be enhanced to improve the visibility of the winker lamp 10.

Furthermore, according to the present embodiment, the light from the light source 51 emitted to the exterior from the second spherical surfaces 71c, 71d can be focused on the optical axis OA, and the luminance can be enhanced without increasing the power consumption of the light source 51.

Thereby, it becomes possible to realize particularly Goal 7 (ensure access to affordable, reliable, sustainable and modern energy for all) and Goal 13 (take urgent action to combat climate change and its impacts) among the Sustainable Development Goals (SDGs) established by the United Nations.

The disclosure is not limited to the embodiments described above, and it goes without saying that various modifications are possible without departing from the gist thereof. In the embodiments described above, the winker lamps 10, 110 applied to a motorcycle were shown, but the disclosure is not limited thereto, and can also be applied to other vehicles such as small mobility vehicles capable of traveling on public roads. Furthermore, the disclosure can be applied not only to the winker lamps 10, 110 but also to rear combination lamps etc.

In addition, the material, shape, dimensions, number, installation location, etc. of each component in the embodiments described above are arbitrary as long as they can achieve the disclosure, and are not limited to the embodiments described above.

### [Reference Signs List]

10: winker lamp (vehicle lighting fixture)
20: housing
30: housing body
31: housing bottom wall
31a: substrate support column
31b: screw fixing column
31c: wiring holding post
32: housing side wall
32a: fixed cylinder part
32b: wiring insertion hole
33: opening part
40: lens
41: lens body
42: lens sidewall
50: substrate
51: light source
52: large diameter hole
53: small diameter hole
60: light guide member
61: bottom wall part (light guide part)
61a: surface part
61b: back surface part
61c: annular reflective surface
61d: reflective surface
62: side wall part (second emitting part)
62a: first stand wall
62b: second stand wall
62c: connecting wall
62d: second emitting surface
62e: protrusion part
63: inner lens part
70: incident part
70a: incident surface
71: first emitting part
71a: first emitting surface
71b: first spherical surface
71c, 71d: second spherical surface
100: light guide member
110: winker lamp
111, 112: light source
113: light guide member
114, 115: inner lens part
BL1: first boundary line
BL2: second boundary line
BL3: third boundary line
BL4: fourth boundary line
CP: positioning protrusion part
CU: vehicle controller
HL: screw insertion hole
LN: wiring
L1: first light
L2: second light
N1: first normal line
N2: second normal line
OA, OA1, OA2: optical axis
P1: first arbitrary point
P2: second arbitrary point
SC: fixing screw
α°: first angle
β°: second angle

## Claims

1. A vehicle lighting fixture (10) comprising:
a substrate (50) on which a light source is mounted;
a housing (20) for accommodating the substrate (50); and
a light guide member (60) accommodated in the housing (20);
wherein the light guide member (60) comprises
an incident part (70) having an incident surface for allowing light from the light source to be incident into an interior of the incident part (70);
a first emitting part (71) connected to the incident part (70), the first emitting part (71) having a first emitting surface (71a) for allowing light incident from the incident part (70) to be emitted to an exterior;
a light guide part (61) connected to the incident part (70), into which light different from light incident on the first emitting part (71) is incident; and
a second emitting part (62) connected to the light guide part (61) and having a second emitting surface (62d) for allowing light incident from the light guide part (61) to be emitted to an exterior;
wherein the first emitting surface (71a) comprises
a first spherical surface (71b) protruding in a direction of light emission;
second spherical surfaces (71c, 71d) disposed radially outward of the first spherical surface (71b) and configured to emit light to an exterior so as to approach a direction of the light emitted from a center of the first spherical surface (71b) to an exterior.

2. The vehicle lighting fixture (10) according to claim 1, wherein
a first angle is defined as an angle formed between a first normal line (N1) at any first arbitrary point forming the first spherical surface (71b) and a first light beam guided toward the first arbitrary point (P1); and
a second angle is defined as an angle formed between a second normal line (N2) at any second arbitrary point (P2) forming the second spherical surfaces (71c, 71d) and a second light beam guided toward the second arbitrary point (P2),
the second angle is larger than the first angle.

3. The vehicle lighting fixture (10) according to claim 1 or claim 2, wherein
the first emitting surface (71a) is disposed closer to the light source than the second emitting surface (62d) in the light emission direction.

4. The vehicle lighting fixture (10) according to claim 3, wherein
the second emitting part (62) has a first stand wall (62a) and a second stand wall (62b), the first stand wall (62a) and the second stand wall (62b) are disposed facing each other with the first emitting surface (71a) as a center, the first stand wall (62a) and the second stand wall (62b) stand upright in a direction of light emission, and
the second spherical surfaces (71c, 71d) are disposed between the first spherical surface (71b) and the first stand wall (62a) and between the first spherical surface (71b) and the second stand wall (62b), respectively.
